Europäisches Patentamt

European Patent Office

Office européen des brevets

(19)

(11) Numéro de publication: **0 013 857**
**A1**

(12)

# DEMANDE DE BREVET EUROPEEN

(21) Numéro de dépôt: 79401075.1

(22) Date de dépôt: 28.12.79

(51) Int. Cl.³: **H 04 L 27/14**

(30) Priorité: 03.01.79 FR 7900067

(43) Date de publication de la demande: 06.08.80
Bulletin 80/16

(84) Etats contractants désignés: **BE DE GB IT SE**

(71) Demandeur: **LE MATERIEL TELEPHONIQUE THOMSON-CSF, 146 Boulevard de Valmy, F-92707 Colombes Cedex (FR)**

(72) Inventeur: **Houdard, Jean-Pierre LE MATERIEL TELEPHONIQUE, THOMSON-CSF 46 Quai Alphonse Le Gallo, F-92103 Boulogne-Billancourt Cedex (FR)**
Inventeur: **Julie, Jean-Jacques LE MATERIEL TELEPHONIQUE, THOMSON-CSF 46 Quai Alphonse Le Gallo, F-92103 Boulogne-Billancourt Cedex (FR)**

(74) Mandataire: **Chaverneff, Vladimir, LE MATERIEL TELEPHONIQUE THOMSON-CSF Service des Brevets 46 Quai Alphonse Le Gallo, F-92103 Boulogne-Billancourt Cedex (FR)**

(54) **Dispositif de démodulation d'un signal analogique modulé par sauts de fréquence.**

(57)  Le dispositif de démodulation comporte des moyens (1) pour échantillonner et convertir en binaire le signal x (t), des moyens (2) pour reconnaître la fréquence reçue sur chaque échantillon $x_n$, des moyens (3) pour effectuer des statistiques sur N éléments binaires de décodage successifs $r_n$, des moyens (4) pour déterminer le nombre de moments élémentaires correspondant à un même état logique du signal de statistique $q_n$, et des moyens (5) pour restituer les informations numériques transmises.

Application à la transmission de données.

EP 0 013 857 A1

1

## DISPOSITIF DE DEMODULATION D'UN SIGNAL
## ANALOGIQUE MODULE PAR SAUTS DE FREQUENCE

La présente invention concerne un dispositif de démodulation d'un signal analogique modulé par sauts de fréquence.

La technique de modulation par sauts de fréquence est utilisée pour transmettre des données numériques sur de grandes distances. Selon cette technique, des données numériques ayant un premier niveau logique sont transmises sur les lignes du réseau de transmission sous la forme d'un signal analogique sinusoïdal de fréquence $f_1$, et des données numériques ayant un deuxième niveau logique sont transmises sous la forme d'un signal analogique sinusoïdal de fréquence $f_2$, le codage étant effectué à l'émission au moyen d'un dispositif de modulation situé dans l'émetteur de signaux modulés par sauts de fréquence. A la réception, le décodage est effectué au moyen d'un dispositif de démodulation situé dans le récepteur de signaux modulés par sauts de fréquence.

On connaît des dispositifs de démodulation dans lesquels le décodage est effectué à l'aide de moyens de décodage aptes à reconnaître la fréquence reçue et à fournir le niveau logique correspondant à cette fréquence suivant la loi de codage utilisée à l'émission. Ces moyens de décodage sont constitués le plus souvent par deux filtres analogiques résonnants dont l'un est accordé sur la fréquence $f_1$ et l'autre sur la fréquence $f_2$, destinés à recevoir le signal analogique modulé par sauts de fréquence, et par un circuit de décision apte à analyser les signaux fournis par ces deux filtres et à fournir le niveau logique correspondant à la fréquence reçue.

Le principal inconvénient de ces dispositifs est qu'ils ne permettent pas d'éliminer les erreurs de décodage dues aux perturbations introduites par la transmission et notamment aux bruits de transmission et aux distorsions de phase apportées par les lignes du réseau de transmission. Lorsque les perturbations apportées par les lignes du réseau de transmission deviennent très importantes, ce qui est le cas pour la transmission à grande vitesse sur les lignes du réseau téléphonique, ces dispositifs de démodulation ne peuvent plus être utilisés.

D'autre part, les dispositifs de démodulation connus fonctionnent suivant des techniques analogiques. Ils présentent donc tous les inconvénients inhérents à ce genre de techniques, dont les plus importants sont le manque de précision et l'encombrement exagéré.

La présente invention a pour but de remédier aux inconvénients précités.

Selon une caractéristique de l'invention, le dispositif de démodulation d'un signal analogique $x(t)$, constitué par une succession de portions de sinusoïdes $x_1(t)$ et $x_2(t)$ de fréquences respectives $f_1$ et $f_2$, destinées à coder respectivement un premier et un deuxième niveau logique d'un signal modulant numérique y, le rythme de modulation étant défini par une fréquence Fm, la durée $\frac{1}{Fm}$ étant dite moment élémentaire, comporte :

- des moyens d'échantillonnage et de conversion pour échantillonner le signal $x(t)$ à une fréquence F égale à MFm (M entier) et pour convertir en binaire les échantillons obtenus ;

- des moyens de décodage aptes à fournir, en réponse à un échantillon d'entrée $x_n$, un élément binaire de décodage $r_n$ ayant un premier ou un deuxième niveau logique suivant que l'échantillon $x_n$ a été prélevé sur une sinusoïde de fréquence $f_1$ ou $f_2$ ;

- des moyens de statistique pour déterminer, parmi N éléments binaires de décodage obtenus en réponse à N échantillons prélevés successivement sur le signal $x(t)$, le nombre R d'éléments binaires de décodage ayant un premier niveau logique et pour fournir un signal de statistique qui est dans un premier état logique lorsque la condition $R > k_1.N$ (avec $k_1 < 1$) est réalisée, dans un deuxième état logique lorsque la condition $R < (1 - k_1).N$ est réalisée, le premier et le deuxième état logique étant dits états significatifs, ou dans l'état significatif le plus récent lorsque la condition $(1 - k_1).N < R < k_1.N$ est réalisée ;

- des moyens de comptage pour déterminer, pour un état logique donné du signal de statistique, le nombre de moments élémentaires ayant donné lieu à la détermination de cet état logique sur une durée d supérieure ou égale à $\frac{k_2}{Fm}$ (avec $k_2 < 1$) ;

3

- des moyens de restitution du signal modulant, aptes à prendre en compte le signal de statistique à chaque fois que la condition $d = \dfrac{k_2}{Fm}$ est réalisée.

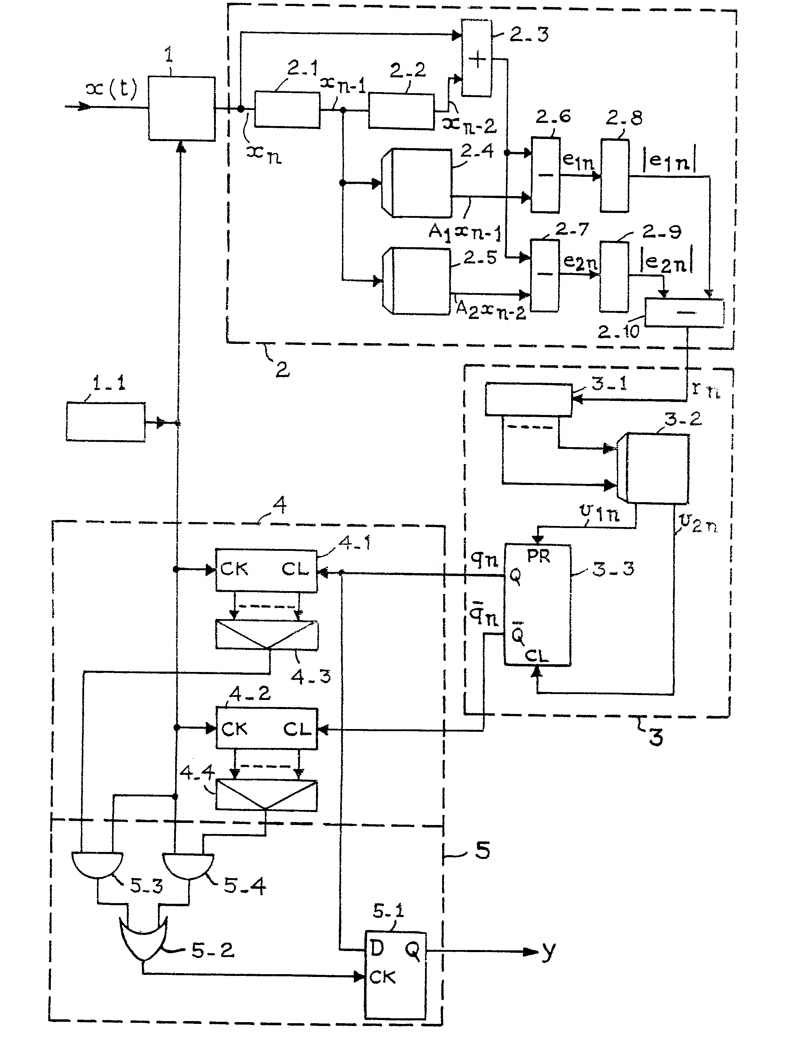

Les objets et caractéristiques de l'invention apparaîtront plus clairement à la lecture de la description suivante d'un exemple de réalisation, ladite description étant faite en relation avec la figure ci-annexée qui est un schéma d'un dispositif de démodulation conforme à l'invention.

A titre d'exemple la description est faite dans le cas correspondant aux valeurs numériques suivantes : M = 14, N = 8, $k_1 = \dfrac{2}{3}$, $k_2 = \dfrac{3}{4}$.

Le rythme de modulation est défini par une fréquence Fm telle que la durée $\dfrac{1}{Fm}$, dite moment élémentaire, est la plus petite durée de présence d'une portion de sinusoïde sur le signal x (t), ou du niveau logique correspondant sur le signal y.

Si l'on se réfère à la figure, on voit que le dispositif de démodulation comporte des moyens d'échantillonnage à la fréquence F et de conversion 1, des moyens de décodage 2, des moyens de statistique 3, des moyens de comptage 4 et des moyens 5 de restitution du signal y.

L'entrée des moyens d'échantillonnage et de conversion 1 reçoit le signal x (t). Ces moyens sont activés par un signal de fréquence F égale à 14 Fm, fourni par une horloge d'échantillonnage 1-1. La sortie des moyens d'échantillonnage et de conversion 1 fournit une suite d'échantillons d'entrée [$x_n$] prélevés sur le signal x (t) à des instants d'échantillonnage $t = \dfrac{n}{F}$ et convertis en binaire. La suite [$x_n$] est appliquée à l'entrée des moyens de décodage 2. Le décodage peut ainsi être effectué suivant des techniques numériques, ce qui est un avantage du dispositif de démodulation.

Les moyens de décodage 2 comportent un registre 2-1 ayant son entrée reliée à la sortie des moyens d'échantillonnage et de conversion 1 et un registre 2-2 ayant son entrée reliée à la sortie du registre 2-1. Ces deux registres permettent de mémoriser à tout instant les deux derniers échantillons d'entrée fournis par les moyens d'échantillonnage et de conversion 1. Les moyens de décodage 2 comportent également un additionneur 2-3 ayant une

4

entrée reliée à l'entrée du registre 2-1 et une entrée reliée à la sortie du registre 2-2, deux mémoires mortes 2-4 et 2-5 dont les entrées d'adressage sont reliées aux sorties du registre 2-1, un soustracteur 2-6 ayant une entrée reliée à la sortie de l'additionneur 2-3 et une entrée reliée à la sortie de la mémoire morte 2-4, un soustracteur 2-7 ayant une entrée reliée à la sortie de l'additionneur 2-3 et une entrée reliée à la sortie de la mémoire morte 2-5, un redresseur 2-8 ayant son entrée reliée à la sortie du soustracteur 2-6, un redresseur 2-9 ayant son entrée reliée à la sortie du soustracteur 2-7, et un soustracteur 2-10 ayant une entrée reliée à la sortie du redresseur 2-8 et une entrée reliée à la sortie du redresseur 2-9.

A l'instant d'échantillonnage $t = \frac{n}{F}$, soient $x_n$, $x_{n-1}$ et $x_{n-2}$ les échantillons présents respectivement à la sortie des moyens d'échantillonnage et de conversion 1, à la sortie du registre 2-1 et à la sortie du registre 2-2. La mémoire morte 2-4 est programmée de manière à fournir, en réponse à l'échantillon $x_{n-1}$ présent sur ses entrées d'adressage, un échantillon $A_1 \cdot x_{n-1}$, $A_1$ étant un coefficient constant égal à $2 \cos (\frac{2\pi f_1}{F})$. De même, la mémoire morte 2-5 est programmée de manière à fournir, en réponse à l'échantillon $x_{n-1}$ présent sur ses entrées d'adressage, un échantillon $A_2 \cdot x_{n-1}$, $A_2$ étant un coefficient constant égal à $2 \cos (\frac{2\pi f_2}{F})$. A l'instant t considéré, les échantillons $e_{1n}$ et $e_{2n}$ présents respectivement à la sortie du soustracteur 2-6 et à la sortie du soustracteur 2-7 s'expriment de la façon suivante :

$$e_{1n} = x_n + x_{n-2} - A_1 \cdot x_{n-1}$$

$$e_{2n} = x_n + x_{n-2} - A_2 \cdot x_{n-1}$$

Ces expressions peuvent se mettre sous la forme suivante :

$$e_{1n} = x_n - (A_1 \cdot x_{n-1} - x_{n-2})$$

$$e_{2n} = x_n - (A_2 \cdot x_{n-1} - x_{n-2})$$

Si l'on pose $y_{1n} = A_1 \cdot x_{n-1} - x_{n-2}$ et $y_{2n} = A_2 \cdot x_{n-1} - x_{n-2}$, on obtient :

$$e_{1n} = x_n - y_{1n}$$

$$e_{2n} = x_n - y_{2n}$$

On démontre facilement que si dans un premier cas $x_{n-2}$, $x_{n-1}$ et $x_n$ sont trois échantillons prélevés successivement sur une même sinusoïde de fréquence $f_1$, la condition $x_n = y_{1n}$, c'est-à-dire encore $e_{1n} = 0$, est réalisée. Dans un second cas, si les échantillons $x_{n-2}$, $x_{n-1}$ et $x_n$ sont prélevés successivement sur une même sinusoïde de fréquence $f_2$, la condition $x_n = y_{2n}$, c'est-à-dire encore $e_{2n} = 0$, est réalisée. A l'instant t considéré la sortie du redresseur 2-8 fournit l'échantillon $|e_{1n}|$ qui est la valeur absolue de l'échantillon $e_{1n}$. De même la sortie du redresseur 2-9 fournit l'échantillon $|e_{2n}|$ qui est la valeur absolue de l'échantillon $e_{2n}$. Au même instant t, la sortie du soustracteur 2-10 fournit un élément binaire $r_n$ qui indique le signe de la différence $|e_{1n}| - |e_{2n}|$. L'élément binaire $r_n$ indique la fréquence à laquelle appartient l'échantillon $x_n$. En effet, dans le cas où $x_n$ appartient à la fréquence $f_1$, $e_{1n}$ est nul et $e_{2n}$ est non nul, par conséquent le signe de la différence $|e_{1n}| - |e_{2n}|$ est négatif et l'élément binaire $r_n$ a un premier niveau logique. Dans le cas où $x_n$ appartient à la fréquence $f_2$, $e_{2n}$ est nul et $e_{1n}$ est non nul, par conséquent le signe de la différence $|e_{1n}| - |e_{2n}|$ est positif et l'élément binaire $r_n$ a un second niveau logique.

Le calcul d'un échantillon $y_{1n}$ est théoriquement effectué par un résonateur parfait accordé sur la fréquence $f_1$, comportant les registres 2-1 et 2-2 et la mémoire morte 2-4 agencés comme le montre la figure et un soustracteur (non représenté sur la figure) ayant une entrée reliée à la sortie du registre 2-2, une entrée reliée à la sortie de la mémoire morte 2-4, et une sortie apte à fournir l'échantillon $y_{1n}$. De même, le calcul d'un échantillon $y_{2n}$ est théoriquement effectué par un résonateur parfait accordé sur la fréquence $f_2$, comportant les registres 2-1 et 2-2 et la mémoire morte 2-5 agencés comme le montre la figure et un soustracteur (non représenté sur la figure) ayant une entrée reliée à la sortie du registre 2-2, une entrée reliée à la sortie de la mémoire morte 2-5, et une sortie apte à fournir l'échantillon $y_{2n}$. Ces deux résonateurs parfaits ainsi agencés constituent un circuit de prédiction de l'échantillon d'entrée $x_n$ à partir des échantillons mémorisés $x_{n-1}$ et $x_{n-2}$.

6

De même, le calcul d'un élément binaire $r_n$ est théoriquement effectué au moyen d'un circuit de comparaison constitué premièrement par deux soustracteurs (non représentés sur la figure) ayant l'un une entrée reliée à la sortie des moyens d'échantillonnage et de conversion 1, une entrée reliée à la sortie du résonateur parfait accordé sur la fréquence $f_1$ et une sortie reliée à l'entrée du redresseur 2-8, l'autre une entrée reliée à la sortie des moyens d'échantillonnage et de conversion 1, une entrée reliée à la sortie du résonateur parfait accordé sur la fréquence $f_2$, et une sortie reliée à l'entrée du redresseur 2-9, deuxièmement par les redresseurs 2-8 et 2-9 et le soustracteur 2-10 agencés comme le montre la figure.

Bien que ces principes s'appliquent encore sur la figure, celle-ci montre une réalisation préférée de l'invention dans laquelle, pour tenir compte des similitudes de traitement entre les calculs de $e_{1n}$ et de $e_{2n}$, les composants sont agencés de manière différente dans le but de réduire au minimum le nombre de ces composants. Par conséquent, bien que la séparation entre circuit de prédiction et circuit de comparaison existe encore sur le plan des principes, la répartition des composants utilisés entre ces deux circuits n'est plus possible.

Les moyens de statistique 3 comportent un registre 3-1 à huit éléments binaires, à entrée série et sorties parallèle, ayant son entrée série reliée à la sortie du soustracteur 2-10, une mémoire morte 3-2, dite mémoire de validation, ayant ses entrées d'adressage reliées aux sorties parallèle du registre 3-1, et une bascule bistable 3-3, dite bascule de conversion trois états-deux états, ayant son entrée PR de forçage au niveau logique haut reliée à une première sortie de la mémoire de validation et son entrée CL de forçage au niveau logique bas reliée à une deuxième sortie de la mémoire de validation.

Le registre 3-1 permet de mémoriser à tout instant d'échantillonnage $t = \frac{n}{F}$, les huit derniers éléments binaires fournis par les moyens de décodage : $r_n$, $r_{n-1}$, $r_{n-2}$, $r_{n-3}$, $r_{n-4}$, $r_{n-5}$, $r_{n-6}$ et $r_{n-7}$. Pour une configuration donnée du registre 3-1, soit R le nombre d'éléments binaires du registre 3-1 ayant un premier niveau

logique. Soient $v_{1n}$ et $v_{2n}$ les éléments binaires présents respectivement sur la première et la deuxième sortie de la mémoire de validation. Les éléments binaires $v_{1n}$ et $v_{2n}$, dits éléments binaires de validation, forment un signal de validation qui est un signal numérique pouvant prendre trois états logiques correspondant à trois des quatre combinaisons possibles pour les éléments binaires $v_{1n}$ et $v_{2n}$.

La mémoire de validation 3-2 est programmée de la façon suivante. Si la condition $R > \frac{2}{3}.8$ est réalisée, c'est-à-dire pour les valeurs $R = 6$, $R = 7$ et $R = 8$, le signal de validation est dans un premier état logique correspondant à $v_{1n} = 0$ et $v_{2n} = 1$. Si la condition $R < \frac{1}{3}.8$ est réalisée, c'est-à-dire pour les valeurs $R = 0$, $R = 1$ et $R = 2$, le signal de validation est dans un deuxième état logique correspondant à $v_{1n} = 1$ et $v_{2n} = 0$. Si la condition $\frac{1}{3}.8 < R < \frac{2}{3}.8$ est réalisée, c'est-à-dire pour les valeurs $R = 3$, $R = 4$ et $R = 5$, le signal de validation est dans un troisième état logique correspondant à $v_{1n} = 1$ et $v_{2n} = 1$. Le premier et le deuxième état logique du signal de validation sont dits états significatifs.

Soient $q_n$ et $\overline{q_n}$ les éléments binaires présents respectivement sur la sortie Q de la bascule 3-3 et sur la sortie $\overline{Q}$ de la bascule 3-3. Les éléments binaires $q_n$ et $\overline{q_n}$, dits éléments binaires de statistique, forment un signal de statistique qui est un signal numérique pouvant prendre deux états logiques correspondant aux deux combinaisons possibles pour les éléments binaires $q_n$ et $\overline{q_n}$.

Lorsque le signal de validation est dans le premier état logique, correspondant à $v_{1n} = 0$ et $v_{2n} = 1$, la bascule 3-3 est telle que le signal de statistique est dans un premier état logique correspondant à $q_n = 1$ et $\overline{q_n} = 0$. Lorsque le signal de validation est dans le deuxième état logique, correspondant à $v_{1n} = 1$ et $v_{2n} = 0$, la bascule 3-3 est telle que le signal de statistique est dans un deuxième état logique correspondant à $q_n = 0$ et $\overline{q_n} = 1$. Lorsque le signal de validation est dans le troisième état logique, correspondant à $v_{1n} = 1$ et $v_{2n} = 1$, la bascule 3-3 est telle que le signal de statistique reste dans

8

l'état significatif le plus récent, c'est-à-dire dans l'état significatif qu'il avait avant le changement d'état du signal de validation.

La combinaison non utilisée pour les éléments binaires de validation $v_{1n}$ et $v_{2n}$ correspond au cas où les deux entrées de forçage de la bascule 3-3 seraient validées simultanément.

Les moyens de comptage 4 comportent un premier comteur 4-1 "modulo" 14, ayant son entrée d'horloge CK reliée à la sortie de l'horloge d'échantillonnage 1-1 et son entrée de remise à zéro CL reliée à la sortie Q de la bascule 3-3, un deuxième compteur 4-2 "modulo" 14, ayant son entrée d'horloge CK reliée à la sortie de l'horloge d'échantillonnage 1-1 et son entrée de remise à zéro CL reliée à la sortie $\overline{Q}$ de la bascule 3-3. Les moyens de comptage 4 comportent également un premier circuit 4-3 de décodage de la valeur entière immédiatement supérieure à la valeur $\frac{3}{4}$. 14, c'est-à-dire un premier circuit de décodage de la valeur 11, ayant ses entrées reliées aux sorties du compteur 4-1, et un deuxième circuit 4-4 de décodage de la valeur 11 ayant ses entrées reliées aux sorties du compteur 4-2.

Les moyens 5 de restitution du signal y comportent une bascule 5-1 du type "D", dite bascule de restitution du signal y, ayant son entrée D reliée à la sortie Q de la bascule 3-3. L'entrée d'horloge CK de la bascule 5-1 est reliée à la sortie d'un circuit de sélection et de synchronisation apte à sélectionner les données de sortie des circuits de décodage 4-3 et 4-4 et à synchroniser ces données par l'horloge d'échantillonnage. Ce circuit de sélection et de synchronisation est constitué par une porte "OU" 5-2 ayant une entrée reliée à la sortie d'une première porte "ET" 5-3 et une entrée reliée à la sortie d'une deuxième porte "ET" 5-4. La porte "ET" 5-3 a une entrée reliée à la sortie du circuit de décodage 4-3 et une entrée reliée à la sortie de l'horloge d'échantillonnage 1-1. La porte "ET" 5-4 a une entrée reliée à la sortie du circuit de décodage 4-4 et une entrée reliée à la sortie de l'horloge d'échantillonnage 1-1. La sortie Q de la bascule 5-1 fournit le signal y.

Le fonctionnement du dispositif de démodulation sera mieux compris à l'aide de l'exemple suivant. Considérons une tranche de
signal x (t) comportant une portion de sinusoïde de fréquence $f_1$
destinée à coder un niveau logique haut du signal y suivie d'une
portion de sinusoïde de fréquence $f_2$ destinée à coder un niveau
logique bas du signal y.

Pendant la durée de réception de la portion de sinusoïde de
fréquence $f_1$, $\frac{2}{3}$ au moins des éléments binaires de décodage présents
dans le registre 3-1 ont un premier niveau logique. On considère
en effet que les bruits de transmission ne peuvent perturber plus
du tiers de ces éléments binaires. Le signal de statistique est
alors dans le premier état logique. Par conséquent le premier
compteur est autorisé à compter et le deuxième compteur est
bloqué. Comme le premier compteur est un compteur "modulo" 14 et
qu'il est incrémenté au rythme auquel le signal x (t) est échantillonné, et comme un nombre entier d'échantillons, égal à 14,
est prélevé pendant chaque moment élémentaire, il compte le
nombre de moments élémentaires sur lesquels la fréquence $f_1$ est
présente. Pour chacun de ces moments élémentaires, lorsque le
premier état logique du signal de statistique est obtenu sur une
durée d égale aux $\frac{3}{4}$ de chacun de ces moments élémentaires, un
niveau logique haut est obtenu sur la sortie Q de la bascule 5-1
de restitution du signal y.

A la transition du signal modulé par sauts de fréquence,
c'est-à-dire au passage de la réception de la portion de sinusoïde
de fréquence $f_1$ à la réception de la portion de sinusoïde de
fréquence $f_2$, le nombre d'éléments binaires de décodage présents
dans le registre 3-1 et ayant un premier niveau logique diminue
progressivement à chaque instant d'échantillonnage. Lorsqu'il
devient inférieur à 6 tout en restant supérieur à 2, le signal de
validation prend le troisième état logique. Mais comme le signal
de statistique reste dans l'état significatif le plus récent,
c'est-à-dire ici dans le premier état logique, le premier compteur
continue à compter et le deuxième compteur reste bloqué, et ceci
jusqu'à ce que ce nombre devienne inférieur à 3. A ce moment-là,
le signal de validation prend le deuxième état logique. Par conséquent, le signal de statistique prend le deuxième état logique et le premier compteur cesse de compter. Si, à ce même moment, le premier compteur a atteint la valeur 11, une nouvelle donnée ayant un niveau logique haut pourra être restituée par la bascule 5-1. Sinon, aucune donnée ne sera restituée par cette bascule. Au même moment, le deuxième compteur commence à compter.

Pendant la durée de réception de la portion de sinusoïde de fréquence $f_2$, c'est-à-dire tant que le signal de statistique reste dans le deuxième état logique, le deuxième compteur continue à compter. Puisqu'il est identique au premier compteur et qu'il est incrémenté de la même façon, il compte le nombre de moments élémentaires sur lesquels la fréquence $f_2$ est présente. Pour chacun de ces moments élémentaires, lorsque le deuxième état logique du signal de statistique est obtenu sur une durée d égale aux $\frac{3}{4}$ de chacun de ces moments élémentaires, un niveau logique bas est obtenu sur la sortie Q de la bascule 5-1 de restitution du signal y.

On voit donc sur cet exemple que les moyens de statistique permettent, d'éliminer les erreurs de décodage dues aux bruits de transmission, moyennant un choix convenable des valeurs N et $k_1$. Le choix de la valeur $k_1$ est déterminé par la qualité de la transmission.

Le choix de la valeur N résulte d'un compromis entre un critère de fiabilité des statistiques (N grand) et un critère de précision dans l'analyse des transitions du signal modulé par sauts de fréquence (N petit).

On voit de plus que les moyens de statistique et les moyens de comptage permettent d'éliminer les erreurs de décodage dues aux distorsions de phase introduites par les lignes de transmission, moyennant un choix convenable des valeurs M et $k_2$. Ils permettent en effet de déterminer avec précision le nombre de moments élémentaires ayant donné lieu à la détermination, sur une durée $\tau$, d'un même état logique donné du signal de statistique. Ce nombre est égal à $\lambda$ ($\lambda$ entier) si la condition $\frac{M.\lambda}{F} \leqslant \tau < \frac{M.(\lambda + k_2)}{F}$ est réalisée, ou à $\lambda + 1$ si la condition $\tau \geqslant \frac{M.(\lambda + k_2)}{F}$ est réalisée. Ce nombre indique le nombre de moments élémentaires non affectés par les distorsions de phase, dans la mesure où les distorsions de phase, c'est-à-dire les différences de durées entre une portion de sinusoïde émise et la portion de sinusoïde correspondante reçue, restent inférieures à la durée $\frac{k_2}{Fm}$ . Le choix de la valeur $k_2$ est déterminé par les lignes de transmission et par le rythme de modulation utilisés.

Le choix de la valeur M (ou de la valeur F puisque $\frac{M}{F} = \frac{1}{Fm}$) résulte d'un compromis entre la précision et le coût du dispositif de démodulation. Plus la fréquence d'échantillonnage F est élevée, plus les transitions du signal modulé par sauts de fréquence (c'est-à-dire les zones où interviennent les erreurs de décodage dues aux distorsions de phase) sont observées avec précision, mais plus le coût du dispositif de démodulation est élevé.

12

REVENDICATIONS

1. Dispositif de démodulation d'un signal analogique x (t) modulé par sauts de fréquence, constitué par une succession de portions de sinusoïdes $x_1$ (t) et $x_2$ (t) de fréquences respectives $f_1$ et $f_2$, destinées à coder respectivement un premier et un deuxième niveau logique d'un signal modulant numérique y, le rythme de modulation étant défini par une fréquence Fm, la durée $\frac{1}{Fm}$ étant dite moment élémentaire, comportant des moyens d'échantillonnage et de conversion pour échantillonner le signal x (t) à une fréquence F multiple de Fm (F = mFm) et pour convertir en binaire les échantillons obtenus, et des moyens de décodage aptes à fournir, en réponse à un échantillon $x_n$, un élément binaire de décodage $r_n$, ayant un premier ou un deuxième niveau logique suivant que l'échantillon $x_n$ a été prélevé sur une portion de sinusoïde de fréquence $f_1$ ou $f_2$, caractérisé en ce qu'il comporte :

- des moyens de statistique pour déterminer, parmi N éléments binaires de décodage obtenus en réponse à N échantillons prélevés successivement sur le signal x (t), le nombre R d'éléments binaires de décodage ayant un premier niveau logique et pour fournir un signal de statistique qui est dans un premier état logique lorsque la condition $R > k_1$ . N (avec $k_1 < 1$) est réalisée, dans un deuxième état logique lorsque la condition $R < (1 - k_1)$ . N est réalisée, le premier et le deuxième états logiques étant dits états significatifs, ou dans l'état significatif le plus récent lorsque la condition $(1 - k_1)$ . N < R < $k_1$ . N est réalisée ;

- des moyens de comptage pour déterminer, pour un état logique donné du signal de statistique, le nombre de moments élémentaires ayant donné lieu à la détermination de cet logique sur une durée d supérieure ou égale à $\frac{k_2}{Fm}$ (avec $k_2 < 1$) ;

- des moyens de restitution du signal modulant, aptes à prendre en compte le signal de statistique à chaque fois que la condition $d = \frac{k_2}{Fm}$ est réalisée.

2. Dispositif selon la revendication 1, caractérisé en ce que les moyens de statistique comportent :

- un registre de N éléments binaires à entrée série et sorties parallèle ayant son entrée série reliée à la sortie des moyens de décodage ;

- une mémoire morte, dite mémoire de validation, dont les entrées d'adressage sont reliées aux sorties du registre, dont les sorties de données fournissent un signal de validation à deux éléments binaires qui est dans un premier état logique lorsque la condition $R > k_1 \cdot N$ est réalisée, dans un deuxième état logique lorsque la condition $R < (1 - k_1) \cdot N$ est réalisée, ou dans un troisième état logique lorsque la condition $(1 - k_1) \cdot N < R < k_1 \cdot N$ est réalisée ;

- une bascule de conversion trois états-deux états ayant son entrée de forçage à un premier niveau logique reliée à une première sortie de la mémoire de validation et son entrée de forçage à un second niveau logique reliée à une deuxième sortie de la mémoire de validation, les sorties Q et $\overline{Q}$ de cette bascule fournissant le signal de statistique, l'état logique non utilisé pour le signal de validation correspondant au cas où les deux entrées de forçage seraient validée simultanément.

3. Dispositif selon les revendications 1 et 2, caractérisé en ce que les moyens de comptage comportent : un premier compteur modulo M, ayant son entrée d'horloge reliée à la sortie de l'horloge d'échantillonnage de fréquence F, son entrée de remise à zéro reliée à l'une des sorties de la bascule de conversion trois états-deux états et ses sorties reliées à un premier circuit de décodage de la valeur entière immédiatement supérieure à la valeur $k_2 \cdot M$, un deuxième compteur modulo M, ayant son entrée d'horloge reliée à la sortie de l'horloge d'échantillonnage de fréquence F, son entrée de remise à zéro reliée à l'autre sortie de la bascule de conversion trois états-deux états et ses sorties reliées à un deuxième circuit de décodage de la valeur entière immédiatement supérieure à la valeur $k_2 \cdot M$.

4. Dispositif selon les revendications 1 et 2, caractérisé en ce que les moyens de restitution du signal modulant comportent une bascule du type D, dite bascule de restitution du signal modulant, ayant son entrée D reliée à l'une des sorties de la bascule de conversion trois états-deux états, et son entrée d'horloge reliée à la sortie d'un circuit de sélection et de synchronisation apte à

14

sélectionner les données de sortie des circuits de décodage de la valeur entière immédiatement supérieure à la valeur $k_2$ . M et à synchroniser ces données sur l'horloge d'échantillonnage de fréquence F, cette bascule D fournissant en sortie le signal y.

5. Dispositif selon les revendications 3 et 4, caractérisé en ce que le circuit de sélection des données de sortie du circuit de comptage et de synchronisation de ces données par l'horloge d'échantillonnage de fréquence F comporte une première porte "ET" ayant une entrée reliée à la sortie du premier circuit de décodage et une entrée reliée à la sortie de l'horloge d'échantillonnage de fréquence F, une deuxième porte "ET" ayant une entrée reliée à la sortie du deuxième circuit de décodage et une entrée reliée à la sortie de l'horloge d'échantillonnage de fréquence F, et une porte "OU" ayant une entrée reliée à la sortie de la première porte "ET" et une entrée reliée à la sortie de la deuxième porte "ET", la sortie de la porte "OU" fournissant le signal de sortie du circuit de sélection et de synchronisation.

RAPPORT DE RECHERCHE EUROPEENNE

Office européen
des brevets

0013857
Numéro de la demande

EP 79 40 1075

# DOCUMENTS CONSIDERES COMME PERTINENTS

| Catégorie | Citation du document avec indication, en cas de besoin, des parties pertinentes | Revendication concernée |
|---|---|---|
| | IEEE TRANSACTIONS ON COMMUNICATION TECHNOLOGY, vol. COM-18, no. 5, octobre 1970, New Uork, US C.A. BUZZARD "An all-digital multi-channel narrow-band FSK data receiver", pages 619-624. <br><br> * Page 619, colonne de droite, lignes 1-17; figure 3 * <br><br>-- | 1 |
| | IEEE TRANSACTIONS ON AUDIO AND ELECTROACOUSTICS, vol. AU-16, no. 3, septembre 1968 New York , US L.B. JACKSON et al. "An approach to the implementation of digital filters", pages 413-421. <br><br> * Page 418, colonne de gauche, dernier alinéa, colonne de droite, ligne 27 * <br><br>-- | 1 |
| A | NACHRICHTENTECHNISCHE ZEITSCHRIFT, vol. 25, juillet 1972, no.7, Berlin, DE F.G. BRAUN "Frequenzdetektion mit dämpfungsfreien digitalen Resonatoren", pages 325 à 329. <br><br> * Page 325, paragraphe 1; page 329, paragraphe 5 * <br><br>-- | 1 |
| A | US - A - 4 080 516 (KUWA HARA) <br><br> * Colonne 7, ligne 47 à colonne 8, ligne 64 * <br><br>---- | 1 |

**CLASSEMENT DE LA DEMANDE (Int. Cl. 3)**

H 04 L 27/14

**DOMAINES TECHNIQUES RECHERCHES (Int. Cl. 3)**

H 04 L 27/14
        27/10
         5/06
        27/26
H 04 Q  1/45

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le present rapport de recherche a eté etabli pour toutes les revendications

| Lieu de la recherche | Date d'achevement de la recherche | Examinateur |
|---|---|---|
| La Haye | 09-04-1980 | GEISLER |

OEB Form 1503.1  06.78